# FASCICULE DE BREVET EUROPEEN

(11) **EP 1 425 129 B1**
(45) Date de publication et mention de la délivrance du brevet: **10.07.2013**
(21) Numéro de dépôt: 02730323.9
(22) Date de dépôt: 28.03.2002
(51) Int. Cl.: B23K 11/31

(54) **PINCE-ROBOT D'ASSEMBLAGE A DISPOSITIF DE DETALONNAGE ET D'EQUILIBRAGE AUTO-ADAPTATIF**
ZANGE FÜR EINE ROBOTEREINRICHUNG MIT VORRICHTUNG ZUM JUSTIEREN UND AUSGLEICHEN
WELDING CLAMP-ROBOT WITH SELF-ADAPTING RELIEVING AND BALANCING DEVICE

(30) Priorité: 29.03.2001 FR 0104246
(43) Date de publication de la demande: 09.06.2004
(73) Titulaire: ARO Welding Technologies, 72500 Château-du-Loir (FR)
(72) Inventeur: PLOT, Hervé, Jean, F-72000 Le Mans (FR); TIBERGHIEN, Olivier, Tanguy, F-37360 Semblancay (FR); LEPELTIER, Hervé, Philippe, F-49000 Angers (FR); BINET, Florent, F-37540 St Cyr sur Loire (FR)
(74) Mandataire: Cabinet Plasseraud
(86) Numéro de dépôt international: PCT/FR2002/001090
(87) Numéro de publication internationale: WO 2002/078892

(56) Documents cités:
- FR-A- 2 728 820
- US-A- 5 340 960
- US-A- 5 528 011
- US-A- 5 883 355
- US-A- 5 898 285
- PATENT ABSTRACTS OF JAPAN vol. 1998, no. 01, 30 janvier 1998 (1998-01-30) & JP 09 248676 A (HITACHI LTD), 22 septembre 1997 (1997-09-22)
- PATENT ABSTRACTS OF JAPAN vol. 1998, no. 01, 30 janvier 1998 (1998-01-30) & JP 09 248678 A (NISSAN MOTOR CO LTD), 22 septembre 1997 (1997-09-22)
- PATENT ABSTRACTS OF JAPAN vol. 2000, no. 11, 3 janvier 2001 (2001-01-03) & JP 2000 218377 A (OBARA CORP), 8 août 2000 (2000-08-08)

## Description

La présente invention concerne une pince-robot d'assemblage à dispositif tel que décrit dans le préambule de la revendication 1, de détalonnage et d'équilibrage auto-adaptatif, tel que décrit dans le préambule de la revendication 1, comprenant deux bras porte-outils propres à se rapprocher l'un de l'autre par pivotement (pince en X) ou translation (pince en C) sous l'action d'un actionneur principal, de sorte que lesdits outils puissent enserrer entre eux un sous-ensemble à assembler, un actionneur auxiliaire d'équilibrage étant prévu pour le détalonnage d'un des outils par rapport audit sous-ensemble, et pour ramener l'un des bras, dit "bras de référence", dans une position de butée située en retrait par rapport audit sous-ensemble après une phase d'assemblage lors de laquelle l'outil porté par ledit bras de référence a été mis au contact dudit sous-ensemble, cet actionneur auxiliaire étant monté à cet effet entre une partie de support fixe et ledit bras de référence. Document US5898285 décrit une telle pince-robot.

L'invention s'applique aux outils ou machines devant réaliser des opérations d'assemblage par soudage, emboutissage, agrafage ou autre lorsque l'outil ou inversement la pièce sont transportés par un robot pour exécuter les différents points d'assemblage que comporte la gamme de fabrication.

Si le robot transporte la ou les pièces à assembler, l'outil ou la machine sont fixés au sol. Si inversement le robot transporte l'outil d'assemblage, la ou les pièces à assembler sont fixées par rapport au sol.

L'invention s'applique lorsque l'outil est muni d'un système de fermeture permettant d'enserrer les pièces à assembler entre deux bras ou deux mâchoires articulées.

Pour expliquer les buts et avantages de l'invention, il convient d'abord de décrire le fonctionnement d'un système actuel en prenant comme exemple une pince robot à souder par résistance.

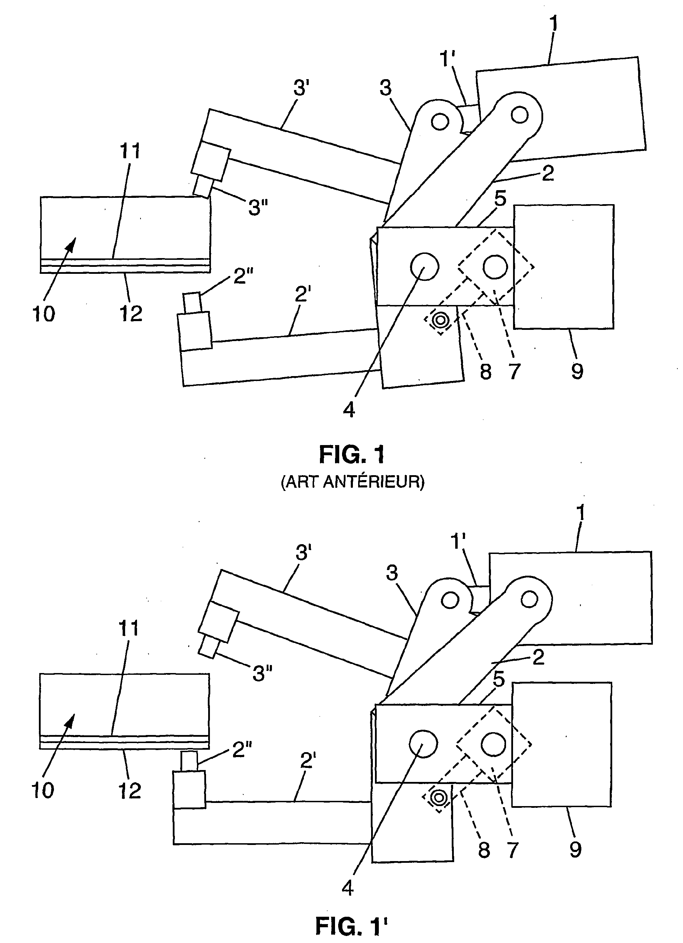

La figure 1 représente de façon schématique un outil connu, du type pince-ciseaux avec son actionneur principal 1.

La pince est dite en X ou en ciseaux car l'effort est transmis de l'actionneur de soudage 1 jusqu'aux électrodes 2" et 3", à l'extrémité des bras porte-électrodes inférieur ou de référence 2' et supérieur 3', par l'intermédiaire de bras de levier 2 et 3 en rotation autour d'un axe d'articulation commun 4. L'actionneur principal 1, attaché entre les deux bras de levier 2 et 3 par l'intermédiaire de son corps principal 1 et d'une tige 1', peut être pneumatique, hydraulique, électrique, électromagnétique ou mécanique. Ce qui va être indiqué ci-dessous sera également valable pour les pinces dites en C, dans lesquelles les outils se déplacent l'un vers l'autre par translation et non par rotation de leurs bras respectifs.

Un actionneur auxiliaire 7, dit de détalonnage, d'équilibrage ou d'accostage, qui peut être du même type que ci-dessus, est rattaché entre une partie de support fixe 5 et l'un des deux bras de levier 2-3 de l'articulation, en l'occurrence le bras 2, par l'intermédiaire de sa tige 8.

Le débattement du sous-ensemble constitué par le bras de levier 2 et le bras porte-électrode inférieur 2' sera limité à la course de l'actionneur auxiliaire 7. Le bras 2' est appelé bras de référence, en opposition au bras supérieur 3' dont le débattement sera directement fonction de la course généralement plus importante de l'actionneur principal 1.

Eventuellement, l'outil peut être équipé d'un transformateur de soudage 9 ; le sous-ensemble à assembler 10 est supposé fixe par rapport au sol ; l'outil est fixé de façon rigide au robot manipulateur (non représenté) par l'intermédiaire de son support 5 ou du transformateur de soudage 9.

Les mouvements de sortie de la tige 1' de l'actionneur principal 1 permettent de refermer le sous- ensemble articulé 2-2' et 3-3' autour de son axe 4 et ainsi d'enserrer les tôles 11 et 12 entre les électrodes 2" et 3".

Pour obtenir une bonne qualité d'assemblage sans déformation des tôles, il est nécessaire que le sous-ensemble constitué par le bras de référence 2', le bras mobile 3' et l'actionneur principal 1 soit parfaitement libre autour de son axe 4.

Le rôle de l'actionneur auxiliaire 7 est d'assurer cette opération d'équilibrage et de rendre l'outil capable de compenser le poids du sous-ensemble articulé ainsi que les variations de position relative de l'électrode 2" du bras de référence 2' vis à vis du sous-ensemble à assembler 10.

Les raisons de ces variations peuvent être diverses. Les principales sont la tolérance de positionnement du robot, l'usure de l'électrode 2" et la tolérance sur l'épaisseur des tôles 11 et 12.

De plus, l'outil doit être capable de compenser la déformation du sous-ensemble constitué par le bras fixe 2 et le bras de référence 2' lors de l'application de l'effort d'assemblage.

Un mauvais équilibrage de l'outil entraîne une dispersion de l'effort d'assemblage au travers des éléments de fixation du sous-ensemble à assembler dans son outillage. Outre le risque de déformation des tôles 11 et 12, l'équilibre des efforts entre les électrodes 2" et 3" et le sous-ensemble à assembler 10 ne peut plus être garanti. Ce déséquilibre peut directement nuire à la qualité du processus d'assemblage.

Une fois la pince équilibrée et fermée, l'opération d'assemblage d'un point de soudage N peut être réalisée.

La figure 1' représente la pince-ciseaux de la figure 1 équilibrée, avec l'électrode 2" du bras de référence 2' au contact du sous-ensemble à assembler 10. L'actionneur principal 1 peut être commandé pour fermer l'ensemble mobile 3 et 3' et réaliser l'opération d'assemblage par soudage au point N.

Lorsque le cycle de soudage est terminé, l'actionneur principal 1 est commandé pour écarter de l'ensemble 10 l'ensemble mobile des bras 3 et 3'. Toutefois, avant que le robot puisse se déplacer avec son outil, il est indispensable d'écarter de la tôle 12 l'électrode 2" du bras de référence 2', et de redonner à l'outil une géométrie de référence définie et rigide. Il s'agit de l'opération dite de détalonnage.

Cette opération est réalisée au moyen de l'actionneur auxiliaire 7, en remettant fermement le bras de référence 2' en butée dans une position de retrait des tôles 12 et 11.

Un réglage de la longueur de la tige 8 de l'actionneur auxiliaire 7 permet d'ajuster la distance d'écartement de l'électrode de référence 2" par rapport au sous-ensemble à assembler 10. Cette distance est appelée "course de détalonnage".

Le robot peut alors poursuivre sa trajectoire jusqu'au point suivant N+1 de la gamme de soudage, et débuter un nouveau cycle d'assemblage.

Les inconvénients de la technique qui vient d'être décrite ressortent des considérations suivantes.

Habituellement le détalonnage est assuré au moyen d'un vérin à simple course en ajustant la pression du fluide dans chacune de ses chambres, ou au moyen d'un jeu de ressorts dont la position d'équilibre correspond à la position accostée de l'outil, un vérin simple effet remettant l'outil dans une géométrie de référence.

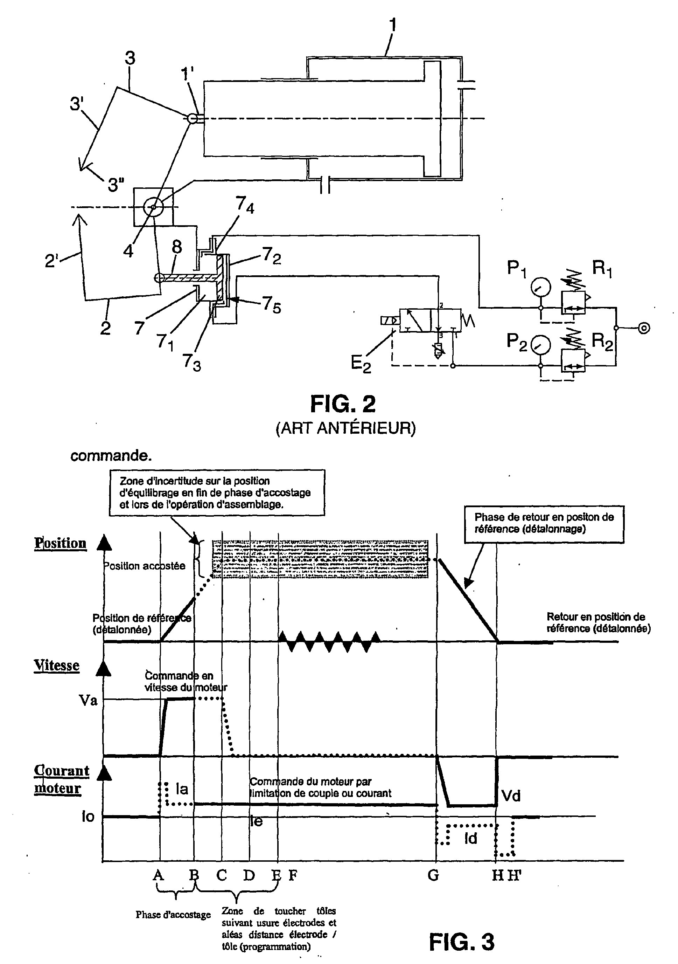

La figure 2 illustre un exemple de fonction d'équilibrage et de détalonnage par vérin pneumatique 7 sur une pince-ciseaux du type de celle des figures 1 et 1'. Sur cette figure les références 1, 1', 2, 2', 2", 3, 3', 3", 7 et 8 désignent des éléments analogues à ceux des figures précédentes, ou jouant le même rôle. La phase d'équilibrage est réalisée ici en régulant les pressions P1 et P2 dans chacune des chambres du vérin de détalonnage 7 qui constitue l'actionneur auxiliaire. Ainsi il devient possible de compenser l'effort engendré par le poids du sous-ensemble articulé, constitué par l'actionneur principal 1, le bras de référence 2' et bras mobile 3'. Lors de l'application de l'effort, les régulateurs à double effet R1 et R2 permettent au piston de détalonnage 73 de se déplacer librement en translation dans son cylindre 74. Ainsi le système peut suivre librement la déformation des bras 2, 2' et 3, 3'. Le mouvement de détalonnage est obtenu par commande d'une électrovanne E2 de façon à purger la chambre arrière 72 du vérin. En absence de contre-pression, le piston 73 va revenir en contact avec la culasse arrière 75 du vérin de détalonnage 7, tirant avec lui le sous-ensemble articulé comprenant l'actionneur principal 1, le bras fixe 2 et le bras mobile 3.

Cette solution nécessite toutefois l'apport d'un fluide sous pression, ce qui est un inconvénient majeur tout particulièrement dans le cas où l'actionneur principal 1 est un moteur électrique. De plus, cette solution ne peut être satisfaisante que pour une position angulaire donnée de l'outil par rapport au sol. Dès que l'on s'écartera de cette position, le poids de l'outil fera apparaître un déséquilibre d'effort sur les tôles.

L'utilisation d'une ou deux vannes proportionnelles en remplacement des régulateurs, elles-mêmes associées ou non à un inclinomètre fixé sur l'outil, permet d'ajuster la contre-pression d'équilibrage pour chaque position de l'outil, mais sa gestion est compliquée et son coût d'acquisition onéreux.

En outre, le système nécessite d'être réajusté pour chaque type de pince en fonction de sa cinématique, du poids et de la position du centre de gravité de sa partie articulée, de l'évolution éventuelle des forces de frottement à l'intérieur de l'articulation et de la modification de la trajectoire du robot.

Il est connu par les documents JP2000218377 et US5898285 des méthodes de contrôle d'une pince-robot qui utilisent un moteur auxiliaire pouvant être commandé de façon prédéterminée.

Le but de la présente invention est de remédier à tous ces inconvénients de la technique antérieure, et à cet effet, il est proposé une pince-robot d'assemblage à dispositif de détalonnage et d'équilibrage auto-adaptatif selon la revendication 1.

L'utilisation d'un moteur électrique au lieu d'un vérin pneumatique ou analogue pour effectuer les opérations d'équilibrage et de détalonnage présente l'avantage de rendre beaucoup plus aisé l'asservissement des parties mobiles de la pince. Il sera plus facile, en particulier, d'actionner automatiquement le moteur pour lui faire produire l'effort nécessaire pour le maintien de l'outil dans la position appropriée quelle que soit son inclinaison.

En particulier et selon une autre caractéristique de la présente invention, on prévoit que ledit dispositif de commande électronique est agencé pour asservir le couple dudit moteur d'après un calcul effectué à partir du courant consommé par lui pendant le déplacement de la partie articulée de la pince lors de son accostage.

De la sorte, il n'est pas nécessaire de programmer le système.

Avantageusement, ledit dispositif de commande électronique et son module de puissance, constitué d'un pont hacheur triphasé à transistors, sont montés dans le prolongement du moteur 13 et sont alimentés par une tension continue. Ce montage permet de diminuer les surtensions et les surcharges thermiques dues aux inductances parasites.

De préférence (mais pas obligatoirement), ledit premier détecteur de position sera constitué par un capteur de mouvement rotatif relié au rotor du moteur, notamment dans le cas d'un moteur rotatif, ou par un capteur de déplacement linéaire entraîné en translation par ledit actionneur auxiliaire, notamment dans le cas d'un moteur linéaire.

Avantageusement encore, la pince-robot comportera un second détecteur de position pour contrôler le retour et la présence du bras de référence dans sa position détalonnée.

La pince-robot pourra encore être caractérisée en ce qu'elle comporte un dispositif de verrouillage mécanique sécurisant ladite position détalonnée en position de repos, de sorte à économiser l'énergie électrique consommée par le moteur, ce verrouillage évitant en outre toute perte de position en cas de coupure d'alimentation en courant du moteur.

Des modes d'exécution de l'invention vont maintenant être décrits à titre d'exemples nullement limitatifs avec référence aux autres figures du dessin ci-annexé dans lequel :
- la figure 3 est un schéma synoptique du principe de la commande d'une pince conforme à la présente invention ;
- les figures 4 à 11 sont des représentations schématiques de différents modes de réalisation de la pince conformes à l'invention : les figures 4 à 7 avec une pince en ciseaux et les figures 8 à 11 avec une pince en C ;
- les figures 12 à 15 montrent des détails de réalisation ; et
- la figure 16 est une demi-vue synoptique du moteur synchrone, avec sa commande électronique.

Dans le synoptique de la figure 3, on a désigné par :
- A le début du cycle d'accostage avec l'outil en position de référence détalonnée ;
- Io le courant de maintien en position détalonnée ;
- Va la vitesse d'accostage imposée (consigne pendant la phase A-B) ;
- Ia le courant dans le moteur 13 pendant la phase d'accostage à vitesse établie Va ;
- A-B la course minimale d'accostage ;
- A-E la course maximale d'accostage ;
- Ie le courant du moteur, imposé pendant la phase d'équilibrage de l'outil ;
- A-C la course d'accostage effective dans l'exemple ;
- C le toucher de l'électrode de référence 2" sur la tôle 12 ;
- D le toucher de l'électrode 3" sur la tôle 11 (en supposant que l'électrode 2" touche la tôle avant l'électrode 3") ;
- D-F la course de mise en effort correspondant à la flexion du bras de référence 2';
- F-G la phase de soudage-forgeage ;
- G la fin du soudage et le début de l'ouverture de la pince ;
- Vd la vitesse de détalonnage à l'ouverture de la pince ;
- Id le courant du moteur 13 pendant la phase de détalonnage à vitesse établie (il est à noter que pendant la phase de détalonnage le couple du moteur est calculé avec la valeur nécessaire pour dégager la pince de la tôle, même en cas de collage des électrodes sur celle-ci) ;
- G-H la course de détalonnage ;
- H le retour de la pince dans sa position de référence détalonnée ;
- H' dito en cas de verrouillage mécanique en position détalonnée pour limiter la valeur du courant dans le moteur 13.

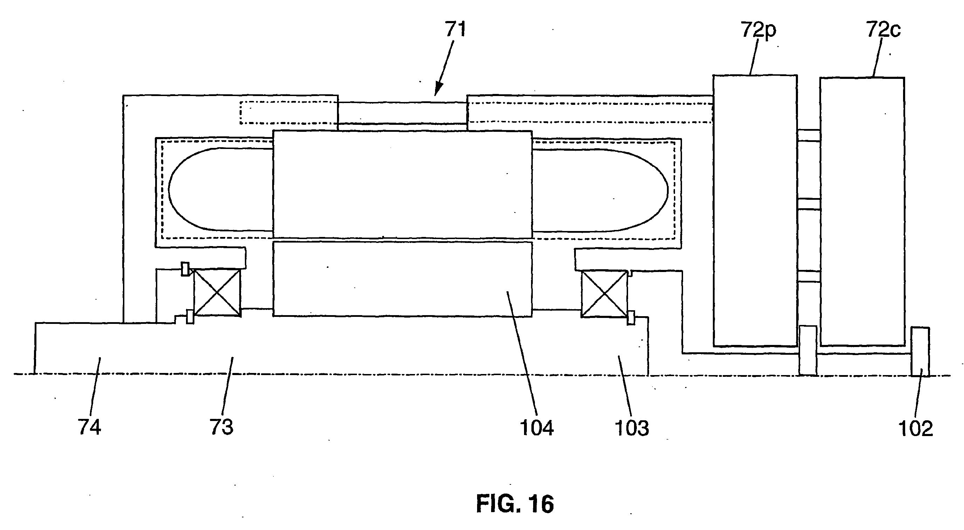

Afin de réaliser les opérations d'accostage, d'équilibrage et de détalonnage, le principe de commande du monteur 13 pourra être le suivant, s'agissant de préférence d'un moteur synchrone triphasé à aimants permanents 104 sans balais, à couple élevé (voir aussi la figure 16, où le moteur est référencé 71).

Une première phase consiste tout d'abord à commander le moteur 13 en vitesse. Grâce à la liaison mécanique 14 entre le moteur 13 et l'articulation 4, l'électrode 2" du bras porte-électrode de référence 2' est mise en mouvement et vient se rapprocher du jeu de tôles 10. Une fois l'accélération terminée et la vitesse d'accostage Va établie, la valeur la du courant du moteur 13 va se stabiliser. Cette valeur va correspondre à celle nécessaire pour repousser (ou retenir) la partie mobile du corps de pince. L'énergie consommée par le moteur 13 servira également à vaincre les forces de frottement liées au déplacement de cette partie mobile.

La seconde phase de l'opération d'équilibrage consiste à maintenir la valeur du courant du moteur 13 à celle nécessaire pour maintenir la vitesse d'accostage Va. Cette valeur de courant est connue, car elle a été mesurée après la phase d'accélération et avant l'entrée en contact de l'électrode 2" du bras de référence 2' avec le jeu de tôles 10. Grâce à cette limitation de courant, lorsque l'électrode 2" du bras 2' entre en contact avec les tôles 10, seul l'effort résiduel correspondant aux forces de frottement lors du déplacement viendra s'appliquer sur les tôles 10. Cette limitation de courant est maintenue durant toute la phase d'assemblage. Il est à noter que pendant le cycle d'équilibrage le couple du moteur 13 est calculé avec la valeur minimum nécessaire pour équilibrer l'outil et lui laisser une souplesse de mouvement afin de ne pas déformer les tôles.

Pour les mêmes raisons, la liaison mécanique 14 entre le bras 2' de l'articulation et le moteur 13 doit être conçue de façon à favoriser sa réversibilité. Ainsi, le système pourra suivre les déformations de l'outil et la flexion des bras lors de l'application de l'effort d'assemblage nécessaire.

Une fois l'opération d'assemblage terminée, l'articulation doit retrouver sa géométrie initiale. Une consigne de vitesse inverse est alors adressée au moteur, et l'asservissement en courant est supprimé. Le moteur 13 entre alors de nouveau en rotation, et l'électrode 2' est écartée du jeu de tôles 10. Le mouvement s'opère jusqu'à ce que le système vienne en position détalonnée et éventuellement au contact d'une butée mécanique. Le système a alors retrouvé sa position de référence détalonnée, et dans l'hypothèse de la présence d'un verrouillage mécanique, il devient possible de limiter ou de supprimer l'alimentation du moteur 13. Avantageusement, cette position de référence détalonnée servira également comme point de prise de zéro absolu pour le codeur incrémental éventuellement utilisé. Il est à noter que la course de détalonnage est programmable et peut être différente selon les points de soudage, ce qui n'est pas possible avec un vérin pneumatique.

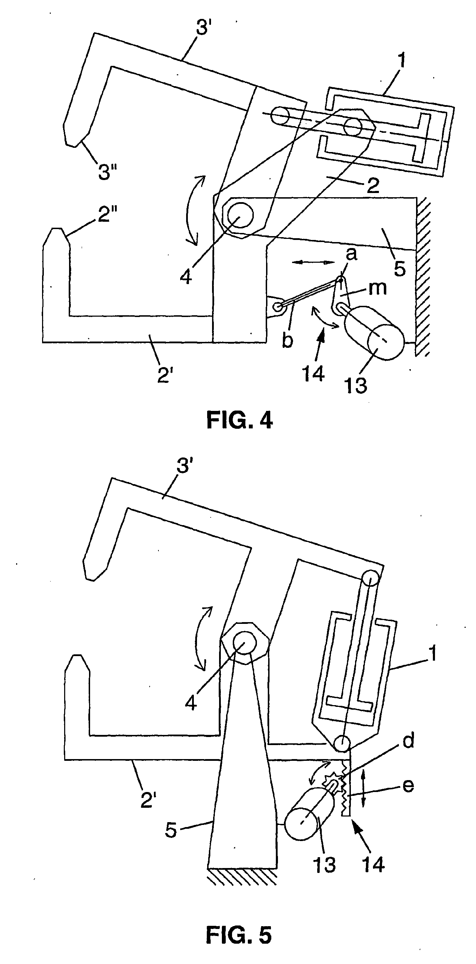

A la figure 4 on a représenté une pince-robot du type à ciseaux conforme à l'invention avec moteur 13 rotatif et transformation de son mouvement de rotation en mouvement de translation par un système 14 du type à biellette b et manivelle m, avec un axe excentrique a. Les autres références désignent des éléments analogues à ceux des figures précédentes et suivantes. Ce dispositif à biellette présente l'avantage de maintenir une certaine souplesse de la partie articulée en position accostée, et d'assurer une rigidité en position détalonnée. Quel que soit le mode de réalisation, la position détalonnée pourra être détectée par un capteur de type à fourche électromagnétique ou optique, par exemple.

A la figure 5, le même type de pince en ciseaux est équipé d'un système mécanique 14 de transmission du mouvement rotatif du moteur 13 au bras de référence 2' du type à pignon denté d et crémaillère e, ceci par l'intermédiaire de l'axe 4.

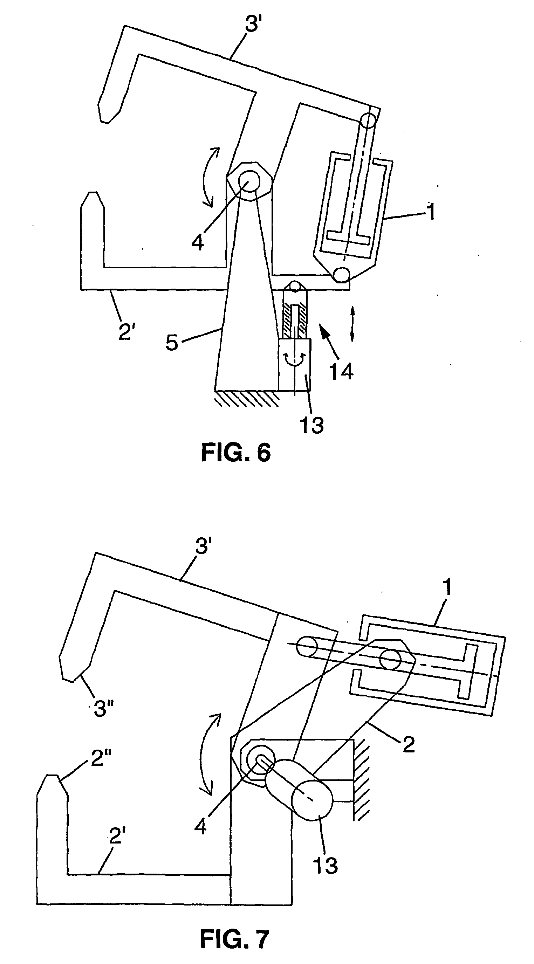

A la figure 6, le même type de pince en ciseaux est équipé d'un système mécanique 14 de transmission du mouvement rotatif du moteur 13 au bras de référence 2' du type à vis-écrou, ceci encore par l'intermédiaire de l'axe 4 ; ce système pourrait être remplacé par un système analogue, en soi connu, du type à douille pourvue intérieurement d'une rampe.

A la figure 7, le système de transmission est direct : connexion de l'arbre du moteur ou moto-réducteur 13 directement sur l'axe d'articulation 4 de la pince en ciseaux.

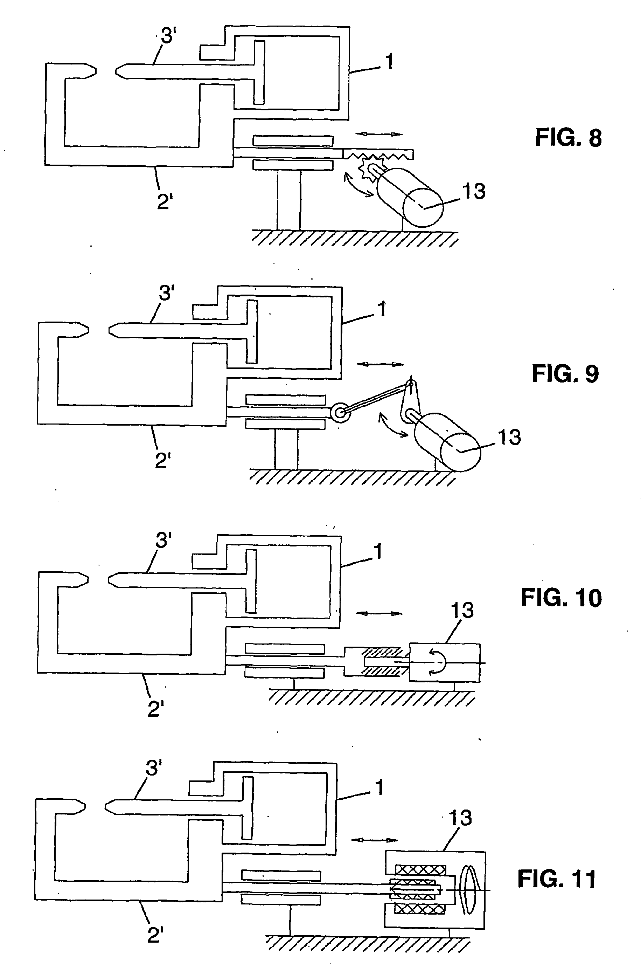

Aux figures 8 à 11 on a montré l'application de l'invention aux pinces-robots du type en C. Sur ces figures on a encore référencé en 1 l'actionneur principal, du type à vérin pneumatique, en 2' et 3' les bras porte-outils, et en 13 le moteur électrique de l'actionneur auxiliaire d'équilibrage 7. Le détalonnage s'effectue encore par actionnement du bras de référence 2', comme avec les pinces à ciseaux. Les modes de réalisation des figures 8 à 10 correspondent respectivement à ceux des figures 5 (à crémaillère), 4 (à biellette et manivelle) et 6 (à vis-écrou) et ont un fonctionnement équivalent.

Quant au mode de réalisation de la figure 11, il montre la mise en oeuvre d'un moteur électrique 13 linéaire pour l'actionnement direct du bras de référence 2' de la pince en C.

Afin d'adapter la cinématique et les efforts nécessaires à l'application dans tous les exemples non limitatifs cités ci-dessus, un système d'amplification / réduction du couple (train épicycloïdal, système à roue et pignon) ou du mouvement de translation (jeu de bras de levier) peut être inclus sur la liaison mécanique entre le moteur 13 et le sous-ensemble mobile.

De la même façon, tout système de renvoi par levier, courroie ou roue et pignon conique peut être envisagé. Le système de commande du moteur électrique 13 peut être directement intégré dans le moteur ou déporté sur l'outil. Un système de commande manuelle de dépannage permet, en absence de puissance électrique, de reproduire la cinématique du système. Cette commande peut être soit en bout d'arbre, soit désaxée, comme selon le brevet français n° 00 04122 du 31 mars 2000 au nom de la demanderesse.

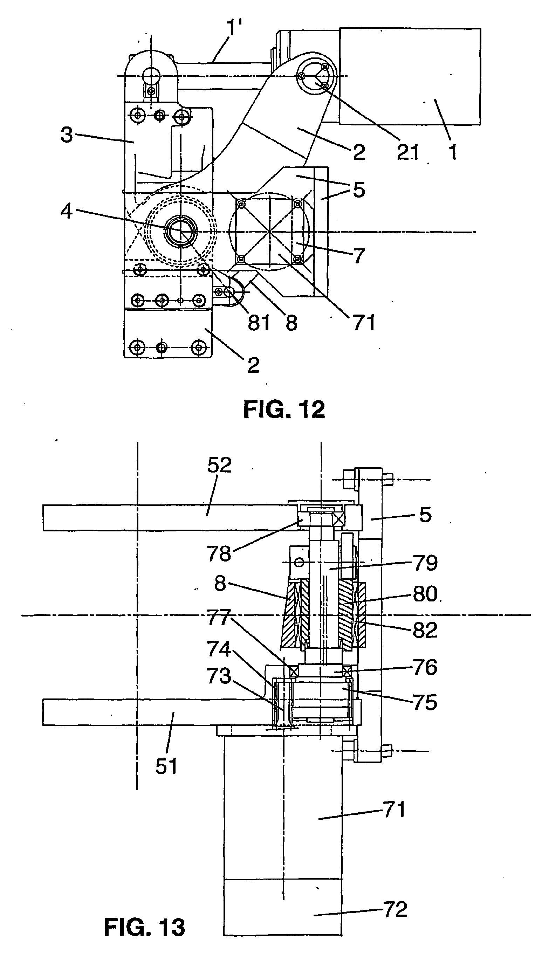

Les figures 12 à 15 montrent certains détails de réalisation, notamment dans le cas d'une transmission de mouvement par biellette et manivelle à excentrique.

La figure 12 montre un corps de pince à ciseaux équipé de son actionneur principal 1 monté sur le bras de référence 2 par l'intermédiaire d'un palier 21. Le bras mobile 3 est mis en rotation autour de l'axe d'articulation 4 par les mouvements d'entrée et de sortie de la tige 1' de l'actionneur 1.

L'actionneur auxiliaire 7 décrit plus précisément sur les figures 13 à 15 est constitué d'un moteur 71 fixé sur le support 5 de la pince. La tige 8 de l'actionneur auxiliaire 7 est liée en 81 au bras de référence 2. Les autres composants de l'outil transformateur et bras porte-électrodes ne sont pas représentés.

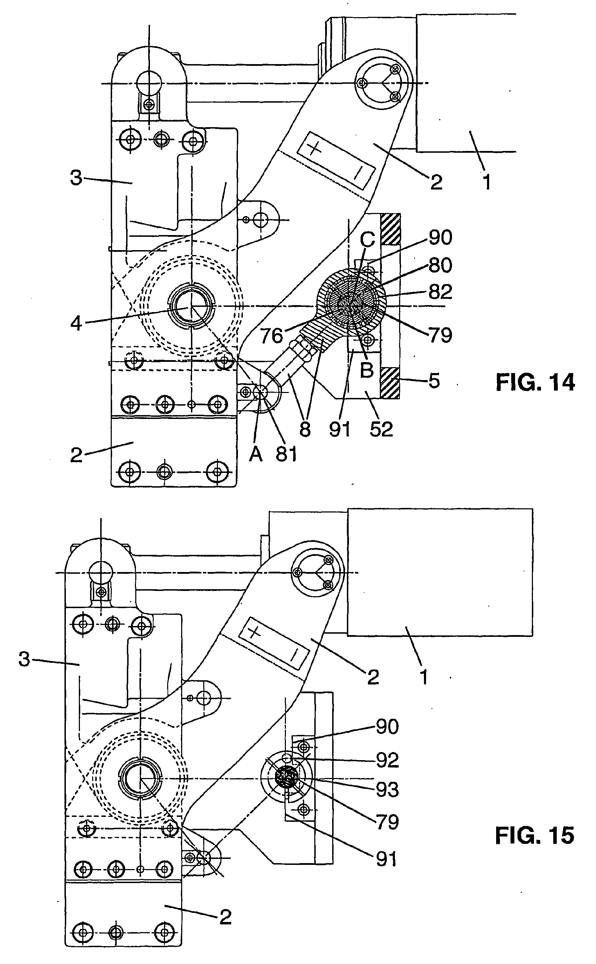

La figure 13 représente le montage de l'actionneur auxiliaire à intérieur des flancs 51 et 52 de l'étrier de support 5, cet actionneur étant constitué du moteur électrique 71 avec sa partie de commande 72c et de puissance 72p montée en bout (figure 16). Le premier détecteur de position est constitué par un capteur de mouvement rotatif 102 relié au rotor 103 du moteur. L'arbre de rotor 73 du moteur 71 est cannelé à son extrémité 74, la cannelure faisant office de pignon pour entraîner en rotation une roue 75 montée sur un arbre 76, lequel est guidé en rotation sur deux paliers 77 et 78 intégrés dans les flancs 51 et 52 de la partie de support 5. L'arbre 76 possède une partie excentrée 79 circulaire autour de laquelle peut se monter une seconde bague excentrique 80 permettant, par rotation autour de l'excentrique 79, d'ajuster la valeur de la course de détalonnage de l'outil (voir figure 14).

La figure 14 présente le principe de réglage de la valeur de l'excentricité et de fonctionnement du système biellette-manivelle permettant de transformer le mouvement de rotation du moteur auxiliaire 71 en mouvement de basculement du sous-ensemble articulé 1, 2 et 3 autour de l'axe 4.

La tige 8 est libre en rotation d'une part autour de l'axe 81 du bras de référence 2, d'autre part à son autre extrémité autour de la bague 80 par la présence d'un palier rotatif 82. Lorsque la pince se trouve en position de référence, les points A, B et C, respectivement centres des axes 81, 76 et du sous-ensemble excentrique 79-80, sont alignés. La tige 8 se trouve alors en position de retrait. L'alignement des points A, B et C permet d'annuler le couple sur l'axe 76 qui pourrait résulter d'un effort issu du sous-ensemble articulé 1, 2 et 3, transmis par la tige 8, et assure une fonction de verrouillage mécanique au système.

Cette fonction de verrouillage peut être garantie en plaçant une butée mécanique (voir détail sur figure 15) 90 légèrement au-delà de cette position d'alignement des points A, B et C. Sans apport d'énergie par le moteur, le système ne peut plus quitter cette position entre la butée et cette position d'alignement.

Afin de garantir au système un maximum de souplesse, il sera avantageux, lors de la phase d'équilibrage, de travailler dans la zone où le point C sera le plus éloigné possible de l'axe A-B. Ceci se réalise en ajustant par rotation la position relative de la bague excentrique 80 autour de l'axe excentrique 79. La valeur de l'excentricité peut ainsi être adaptée au plus juste pour une application donnée.

Dans l'illustration des figures 13 à 15 et après réglage de l'excentricité, la liaison rigide entre la bague 80 et son excentrique 79 est réalisée par emmanchement conique. La valeur d'excentration du sous-ensemble 76, 79 et 80 guidera l'amplitude des mouvements de translation de la tige 8.

La figure 15 montre la mise en place de butées mécaniques pour arrêter la rotation du moteur 71 et servir de point de référence en position détalonnée pour l'une, 90, et de butée d'arrêt de sécurité pour la seconde, 91. Un doigt 92 est monté sur une bague 93 solidaire de l'axe excentrique 79. Lorsque le doigt 92 est au contact de la butée haute 90, l'actionneur auxiliaire a replacé le sous-ensemble articulé 1, 2 et 3 en position de référence détalonnée. Si aucun obstacle ne vient arrêter le bras de référence lors de la phase d'accostage (absence de tôles, rupture ou fissuration mécanique du bras de référence,...) le mouvement du système est stoppé par l'entrée en contact du doigt 90 avec la butée basse 91.

Les avantages de l'invention sont les suivants :
- grâce à la commande asservie du moteur, le dispositif permet à l'outil de s'équilibrer de façon automatique et adéquate pour ne pas déformer les tôles et assurer la qualité de l'assemblage, quelle que soit sa position dans l'espace ;
- le dispositif et son principe de commande sont universels. Ils conviennent pour toute cinématique de pince, qu'elle soit de type C (effort direct du vérin au électrodes) ou de type en ciseaux (effort retransmis par l'intermédiaire d'un bras de levier autour d'un axe d'articulation) ;
- cet équipement autonome se commande par l'envoi d'un simple signal de commande de la phase d'équilibrage ou de détalonnage depuis un automate vers le système de commande ;
- dans le cas où l'actionneur principal est électrique (au lieu d'être pneumatique comme dans les exemples décrits), l'invention permet de supprimer la présence d'un fluide comprimé sur l'outil et les coûts importants qui lui sont associés ;
- à la différence d'un système purement mécanique, le mouvement d'accostage et d'équilibrage est indépendant des mouvements du vérin de soudage ;
- l'utilisateur travaillera dans de meilleures conditions en bénéficiant d'une plus grande flexibilité de sa chaîne de montage ;
- un même outil pouvant travailler dans toutes les directions de l'espace, il pourra effectuer un plus grand nombre d'opérations d'assemblage et de meilleure qualité, ceci sans obligation de changement d'outil ;
- la qualité de l'assemblage sera améliorée et les nécessités de retouche réduites ;
- par la lecture des valeurs du courant nécessaire pour faire accoster la pince, il devient possible de détecter une évolution des frottements dans l'articulation et par conséquent le degré d'usure de outil ;
- par le contrôle de la rotation du moteur et de sa position d'équilibrage, il est possible de détecter un mauvais positionnement du robot, une perte d'électrode, la rupture du bras fixe ou encore un mauvais assemblage de tôle (tôle manquante, mauvais empilage,...) ; enfin,
- par la lecture du courant nécessaire pour effectuer le mouvement de détalonnage, il devient encore possible de détecter le collage éventuel de l'une ou l'autre électrode lors de l'opération d'assemblage.

## Revendications

1. Pince-robot d'assemblage à dispositif de détalonnage et d'équilibrage auto-adaptatif, comprenant :
- deux bras porte-outils (2', 3') propres à se rapprocher l'un de l'autre par pivotement (pince en X) ou translation (pince en C) sous l'action d'un actionneur principal (1), de sorte que les outils (2", 3") puissent enserrer entre eux un sous-ensemble (10) de pièces (11, 12) à assembler,
- un actionneur auxiliaire d'équilibrage (7), pour le détalonnage d'un (2") des outils par rapport audit sous-ensemble (10), en ramenant l'un des bras, dit "bras de référence" (2'), dans une position de butée située en retrait par rapport audit sous-ensemble (10) après une phase d'équilibrage lors de laquelle l'outil (2") porté par ledit bras de référence (2') a été mis au contact dudit sous-ensemble (10) par un accostage, cet actionneur auxiliaire (7) étant monté à cet effet entre une partie de support fixe (5) et ledit bras de référence (2'), ledit actionneur auxiliaire (7) étant constitué par un moteur électrique (13; 71) rotatif ou linéaire,
la dite pince-robot comprenant en outre, en association avec le moteur électrique (13 ; 71) :
- un dispositif de commande électronique (72c) permettant l'asservissement du moteur électrique (13 ; 71) ;
- un système mécanique (14) de transmission de mouvement dudit moteur (13, 71) audit bras de référence (2') ; et
- un premier détecteur de position (102) relié audit dispositif de commande électronique (72c) ;
**caractérisée en ce que**, afin de réaliser les opérations d'accostage, d'équilibrage et de détalonnage, le dispositif de commande (72c) du moteur (13, 71) comprend des moyens assurant, pour chaque opération d'assemblage d'un sous-ensemble (10), un cycle d'équilibrage comprenant deux phases successives dont :
- une première phase consiste tout d'abord à commander ledit moteur (13, 71) en vitesse de sorte que, grâce audit système mécanique (14), l'outil (2") du bras de référence (2') est mis en mouvement et vient se rapprocher dudit sous-ensemble (10), et qu'une fois l'accélération terminée et la vitesse d'accostage (Va) établie, la valeur (Ia) du courant du moteur (13, 71) se stabilise, ladite valeur de courant (Ia) correspondant à celle nécessaire pour repousser ou retenir le sous-ensemble articulé comprenant lesdits bras porte-outils (2', 3') et l'actionneur principal (1) de la pince-robot, l'énergie consommée par ledit moteur (13, 71) servant également à vaincre les forces de frottement liées au déplacement dudit sous-ensemble articulé (1, 2', 3') ; et
- la seconde phase du cycle d'équilibrage consiste à maintenir la valeur (Ia) du courant du moteur (13, 71) à celle nécessaire pour maintenir la vitesse d'accostage (Va), ladite valeur de courant étant connue, car étant mesurée après la phase d'accélération et avant l'entrée en contact de l'outil (2") du bras de référence (2') avec ledit sous-ensemble (10) à assembler, de sorte que, grâce à cette limitation de courant, lorsque l'outil (2") du bras de référence (2') entre en contact avec lesdites pièces (11, 12) à assembler, seul l'effort résiduel correspondant aux forces de frottement lors du déplacement vient s'appliquer sur lesdites pièces (11, 12), ladite limitation de courant étant maintenue (Ie) durant toute l'opération d'assemblage, le couple du moteur (13, 71) étant calculé, pendant le cycle d'équilibrage, avec la valeur minimum nécessaire pour équilibrer la pince-robot et lui laisser une souplesse de mouvement afin de ne pas déformer lesdites pièces (11, 12) à assembler.

2. Pince-robot selon la revendication 1, **caractérisée en ce que** ledit dispositif de commande électronique (72c) et son module de puissance, constitué d'un pont hacheur triphasé à transistors (72p), sont montés dans le prolongement dudit moteur (13; 71) et sont alimentés par une tension continue.

3. Pince-robot selon la revendication 1 ou 2, **caractérisée en ce que** ledit premier détecteur de position est constitué par un capteur de mouvement rotatif (102) relié au rotor (103) du moteur (13; 71) ou par un capteur de déplacement linéaire entraîné en translation par l'actionneur principal (1).

4. Pince-robot selon l'une quelconque des revendications précédentes, **caractérisée en ce qu'**elle comporte un second détecteur de position pour contrôler le retour et la présence du bras de référence (2') dans sa position détalonnée.

5. Pince-robot selon la revendication 4, **caractérisée en ce que** lesdits détecteurs de position sont des capteurs de type électromagnétique ou optique (102).

6. Pince-robot selon l'une quelconque des revendications précédentes, **caractérisée en ce qu'**elle comporte un dispositif de verrouillage mécanique (90, 91) sécurisant ladite position détalonnée en position de repos.

7. Pince-robot selon l'une quelconque des revendications précédentes, du type à moteur électrique (13; 71) rotatif, **caractérisée en ce qu'**il s'agit d'un moteur synchrone triphasé à aimants permanents (104) sans balais, à couple élevé.

8. Pince-robot selon l'une quelconque des revendications précédentes, du type à moteur électrique (13) rotatif, **caractérisée en ce que** ledit système mécanique (14) de transmission du mouvement audit bras de référence (2') est du type à biellette (b) et manivelle (m).

9. Pince-robot selon l'une quelconque des revendications 1 à 7, **caractérisée en ce que** ledit système mécanique (14) de transmission du mouvement audit bras de référence (2') est du type à roue dentée (d) et crémaillère (e), à vis ou à accouplement direct.

10. Pince-robot selon l'une quelconque des revendications précédentes, **caractérisée en ce que** ledit système mécanique (14) de transmission comprend un dispositif (76, 79, 80) de réglage de la course de détalonnage.

11. Pince-robot selon l'une quelconque des revendications précédentes, **caractérisée en ce que** les deux bras porte-outils (2', 3') sont propres à se rapprocher l'un de l'autre par pivotement (pince en X).

## Patentansprüche

1. Zusammenbau-Roboterzange mit selbstanpassender Hinterschneidungs- und Ausgleichsvorrichtung, die enthält:
- zwei Werkzeugträgerarme (2', 3'), die sich durch Schwenken (X-Zange) oder Translationsbewegung (C-Zange) unter der Wirkung eines Hauptstellantriebs (1) so einander annähern können, dass die Werkzeuge (2", 3") eine Teileinheit (10) von zusammenzubauenden Bauteilen (11, 12) zwischen sich einklemmen können,
- einen Ausgleichs-Hilfsstellantrieb (7) zum Hinterschneiden eines (2") der Werkzeuge bezüglich der Teileinheit (10), indem einer der Arme, "Bezugsarm" (2') genannt, nach einer Ausgleichsphase, während der das vom Bezugsarm (2') getragene Werkzeug (2") durch Anlegen mit der Teileinheit (10) in Kontakt gebracht wurde, in eine Anschlagstellung zurückgebracht wird, die sich bezüglich der Teileinheit (10) nach hinten versetzt befindet, wobei dieser Hilfsstellantrieb (7) zu diesem Zweck zwischen einem ortsfesten Trägerteil (5) und dem Bezugsarm (2') montiert wird, wobei der Hilfsstellantrieb (7) aus einem drehenden oder linearen Elektromotor (13; 71) besteht,
wobei die Roboterzange außerdem in Verbindung mit dem Elektromotor (13; 71) enthält:
- eine elektronische Steuervorrichtung (72c), die die Regelung des Elektromotors (13; 71) erlaubt;
- ein mechanisches System (14) zur Bewegungsübertragung vom Motor (13; 71) zum Bezugsarm (2'), und
- einen mit der elektronischen Steuervorrichtung (72c) verbundenen ersten Positionsdetektor (102);
**dadurch gekennzeichnet, dass** die Steuervorrichtung (72c) des Motors (13, 71) zur Ausführung der Vorgänge des Anlegens, Ausgleichens und Hinterschneidens Einrichtungen enthält, die für jeden Zusammenbauvorgang einer Teileinheit (10) einen Ausgleichszyklus gewährleisten, der zwei aufeinanderfolgende Phasen enthält, von denen:
- eine erste Phase zunächst darin besteht, die Geschwindigkeit des Motors (13, 71) so zu steuern, dass mit Hilfe des mechanischen Systems (14) das Werkzeug (2") des Bezugsarms (2') in Bewegung versetzt wird und sich der Teileinheit (10) annähert, und dass, wenn die Beschleunigung beendet und die Anlegegeschwindigkeit (Va) festgelegt ist, der Wert (la) des Stroms des Motors (13, 71) sich stabilisiert, wobei der Stromwert (la) demjenigen entspricht, der notwendig ist, um die die Werkzeugträgerarme (2', 3') und den Hauptstellantrieb (1) der Roboterzange enthaltende gelenkige Teileinheit zurückzudrücken oder zurückzuhalten, wobei die vom Motor (13, 71) verbrauchte Energie ebenfalls dazu dient, die mit der Verschiebung der gelenkigen Teileinheit (1, 2', 3') verbundenen Reibungskräfte zu überwinden; und
- die zweite Phase des Ausgleichszyklus darin besteht, den Wert (la) des Stroms des Motors (13, 71) auf demjenigen zu halten, der notwendig ist, um die Anlegegeschwindigkeit (Va) aufrechtzuerhalten, wobei der Stromwert bekannt ist, da er nach der Beschleunigungsphase und vor dem Inkontakttreten des Werkzeugs (2") des Bezugsarms (2') mit der zusammenzubauenden Teileinheit (10) gemessen wird, so dass, wenn das Werkzeug (2") des Bezugsarms (2') mit den zusammenzubauenden Bauteilen (11, 12) in Kontakt kommt, aufgrund dieser Strombegrenzung nur die den Reibungskräften bei der Verschiebung entsprechende Restkraft auf die Bauteile (11, 12) angewendet wird, wobei die Strombegrenzung während des ganzen Zusammenbauvorgangs aufrechterhalten wird (le), wobei das Drehmoment des Motors (13, 71) während des Ausgleichszyklus mit dem Mindestwert berechnet wird, der notwendig ist, um die Roboterzange auszugleichen und ihr eine Bewegungselastizität zu lassen, um die zusammenzubauenden Bauteile (11, 12) nicht zu verformen.

2. Roboterzange nach Anspruch 1, **dadurch gekennzeichnet, dass** die elektronische Steuervorrichtung (72c) und ihr Leistungsmodul, das aus einer dreiphasigen Zerhackerbrücke mit Transistoren (72p) besteht, in der Verlängerung des Motors (13; 71) montiert sind und mit einer Gleichspannung versorgt werden.

3. Roboterzange nach Anspruch 1 oder 2, **dadurch gekennzeichnet, dass** der erste Positionsdetektor aus einem drehenden Bewegungssensor (102), der mit dem Rotor (103) des Motors (13; 71) verbunden ist, oder aus einem Linearverschiebungssensor besteht, der vom Hauptstellantrieb (1) translationsverschoben wird.

4. Roboterzange nach einem der vorhergehenden Ansprüche, **dadurch gekennzeichnet, dass** sie einen zweiten Positionsdetektor aufweist, um die Rückkehr und das Vorhandensein des Bezugsarms (2') in seiner hinterschnittenen Stellung zu erfassen.

5. Roboterzange nach Anspruch 4, **dadurch gekennzeichnet, dass** die Positionssensoren Sensoren von elektromagnetischer oder optischer Art (102) sind.

6. Roboterzange nach einem der vorhergehenden Ansprüche, **dadurch gekennzeichnet, dass** sie eine mechanische Verriegelungsvorrichtung (90, 91) aufweist, die die hinterschnittene Stellung in der Ruhestellung sichert.

7. Roboterzange nach einem der vorhergehenden Ansprüche, von der Art mit drehendem Elektromotor (13; 71), **dadurch gekennzeichnet, dass** es sich um einen bürstenlosen, synchronen Drehstrommotor mit Dauermagneten (104) mit hohem Drehmoment handelt.

8. Roboterzange nach einem der vorhergehenden Ansprüche, von der Art mit drehendem Elektromotor (13), **dadurch gekennzeichnet, dass** das mechanische System (14) zur Übertragung der Bewegung auf den Bezugsarm (2') von der Art mit Hebelstange (b) und Kurbel (m) ist.

9. Roboterzange nach einem der Ansprüche 1 bis 7, **dadurch gekennzeichnet, dass** das mechanische Übertragungssystem (14) der Bewegung an den Bezugsarm (2') von der Art mit Zahnrad (d) und Zahnstange (e) mit Schraube oder direkter Kopplung ist.

10. Roboterzange nach einem der vorhergehenden Ansprüche, **dadurch gekennzeichnet, dass** das mechanische Übertragungssystem (14) eine Vorrichtung (76, 79, 80) zur Einstellung des Hinterschneidungshubs enthält.

11. Roboterzange nach einem der vorhergehenden Ansprüche, **dadurch gekennzeichnet, dass** die zwei Werkzeugträgerarme (2', 3') sich durch Schwenken (X-Zange) einander annähern können.

## Claims

1. Clamp robot for assembly purposes, with a self-adapting relieving and balancing device, comprising:
- two tool holder arms (2', 3') designed to be moved towards one another by a pivoting (X-shaped clamp) or translating movement (C-shaped clamp) under the action of a main actuator (1) so that the tools (2", 3") are able to clamp between them a sub-assembly (10) of parts (11, 12) to be assembled,
- an auxiliary balancing actuator (7) for relieving said sub-assembly (10) of one (2") of the tools by moving one of the arms, namely a reference arm@ (2'), into a stop position disposed apart from said sub-assembly (10) after a balancing phase during which the tool (2") held by said reference arm (2') has been placed in contact with said sub-assembly (10) by a docking movement, this auxiliary actuator (7) being mounted between a fixed support part (5) and said reference arm (2') for this purpose, said auxiliary actuator (7) being a rotary or linear electric motor (13; 71),
said clamp robot further comprising, co-operating with the electric motor (13; 71):
- an electronic control device (72c) enabling the electric motor (13; 71) to be automatically controlled;
- a mechanical system (14) for transmitting the motion of said motor (13, 71) to said reference arm (2'); and
- a first position detector (102) connected to said electronic control device (72c);
**characterised in that** in order to carry out the docking, balancing and relieving operations, the control device (72c) of the motor (13, 71) has means for running, for each operation of assembling a sub-assembly (10), a balancing cycle comprising two successive phases, of which:
- a first phase involves, firstly, controlling the speed of said motor (13, 71) so that the tool (2") of the reference arm (2') is set in motion by said mechanical system (14) and moves towards said sub-assembly (10), and once the acceleration has terminated and the docking speed (Va) has been established, the value (Ia) of the current of the motor (13, 71) is stabilised, said current value (Ia) corresponding to that needed to push back or hold the articulated sub-assembly comprising said tool holder arms (2', 3') and the main actuator (1) of the clamp robot, the energy consumed by said motor (13, 71) also being used to overcome the frictional forces associated with the displacement of said articulated sub-assembly (1, 2', 3'); and
- the second phase of the balancing cycle involves maintaining the value (Ia) of the current of the motor (13, 71) at that needed to maintain the docking speed (Va), said current value being known, having been measured after the acceleration phase and prior to the tool (2") of the reference arm (2') entering into contact with said sub-assembly (10) to be assembled, so that, by limiting this current, when the tool (2") of the reference arm (2') enters into contact with said parts (11, 12) to be assembled, only the residual force corresponding to the frictional forces during the displacement is applied to said parts (11, 12), said current limitation being maintained (Ie) during the entire assembly operation, the torque of the motor (13, 71) being calculated, during the balancing cycle, with the minimum value necessary to balance the clamp robot and leave it a flexibility of movement so as not to deform said parts (11, 12) to be assembled.

2. Clamp robot as claimed in claim 1, **characterised in that** said electronic control device (72c) and its power module, comprising a three-phase chopper bridge with transistors (72p), are mounted in the extension of said motor (13; 71) and are supplied by a DC voltage.

3. Clamp robot as claimed in claim 1 or 2, **characterised in that** said first position detector is provided in the form of a rotating motion sensor (102) connected to the rotor (103) of the motor (13; 71) or a linear motion sensor driven in translation by the main actuator (1).

4. Clamp robot as claimed in any one of the preceding claims, **characterised in that** it has a second position detector for controlling the return and presence of the reference arm (2') to and in its relieved position.

5. Clamp robot as claimed in claim 4, **characterised in that** said position detectors are sensors of the electromagnetic or optical type (102).

6. Clamp robot as claimed in any one of the preceding claims, **characterised in that** it has a mechanical locking device (90, 91) securing said relieved position in the non-operating position.

7. Clamp robot as claimed in any one of the preceding claims of the type with a rotating electric motor (13; 71), **characterised in that** it is a high-torque brushless three-phase synchronised motor with permanent magnets (104).

8. Clamp robot as claimed in any one of the preceding claims, of the type with a rotating electric motor (13), **characterised in that** said mechanical system (14) for transmitting motion to said reference arm (2') is of the rod (b) and crank (m) type.

9. Clamp robot as claimed in any one of claims 1 to 7, **characterised in that** said mechanical system (14) for transmitting motion to said reference arm (2') is of the pinion (d) and rack (e) type, with screws or a direct coupling.

10. Clamp robot as claimed in any one of the preceding claims, **characterised in that** said mechanical transmission system (14) comprises a device (76, 79, 80) for regulating the relieving path.

11. Clamp robot as claimed in any one of the preceding claims, **characterised in that** the two tool holder arms (2', 3') are designed to move towards one another by a pivoting movement (X-shaped clamp).
